# EUROPÄISCHE PATENTANMELDUNG

(11) **EP 1 343 245 A2**
(43) Veröffentlichungstag der Anmeldung: **10.09.2003**
(21) Anmeldenummer: 03450034.8
(22) Anmeldetag: 31.01.2003
(51) Int. Cl.: H02M 3/156

(54) **Vorrichtung zur Stromversorgung eines induktiven Verbrauchers, insbesondere eines elektromedizinischen Gerätes zur Erzeugung elektromagnetischer Felder**

(30) Priorität: 07.03.2002 AT 3542002
(71) Anmelder: Horst, Leopold, Ing., 4060 Leonding (AT)
(72) Erfinder: Horst, Leopold, Ing., 4060 Leonding (AT)
(74) Vertreter: Hübscher, Heiner, Dipl.-Ing.

(57) **Zusammenfassung**

Es wird eine Vorrichtung zur Stromversorgung eines induktiven Verbrauchers (1), insbesondere eines elektromedizinischen Gerätes zur Erzeugung elektromagnetischer Felder, mit einer an eine Stromquelle angeschlossenen Reihenschaltung aus dem induktiven Verbraucher (1), einem Meßwiderstand (2) und einem Leistungstransistor (5) beschrieben, der über einen Steuersignalgenerator (9) in Abhängigkeit vom Spannungsabfall am Meßwiderstand (2) ansteuerbar ist. Um vorteilhafte Konstruktionsverhältnisse zu schaffen, wird vorgeschlagen, daß der als Schalter ausgebildete Leistungstransistor (5) über einen Komparator (6) mit Schalthysterese ansteuerbar ist, dessen beiden Eingänge (7, 8) einerseits am Steuersignalgenerator (9) und anderseits am Meßwiderstand (2) anliegen, und daß parallel zur Reihenschaltung aus dem induktiven Verbraucher (1) und dem Meßwiderstand (2) eine Freilaufdiode (3) geschaltet ist.

## Beschreibung

Die Erfindung bezieht sich auf eine Vorrichtung zur Stromversorgung eines induktiven Verbrauchers, insbesondere eines elektromedizinischen Gerätes zur Erzeugung elektromagnetischer Felder, mit einer an eine Stromquelle angeschlossenen Reihenschaltung aus dem induktiven Verbraucher, einem Meßwiderstand und einem Leistungstransistor, der über einen Steuersignalgenerator in Abhängigkeit vom Spannungsabfall am Meßwiderstand ansteuerbar ist.

Zur Behandlung des menschlichen Körpers mit elektromagnetischen Wechselfeldern sind elektromedizinische Geräte bekannt, mit deren Hilfe die Feldstärke und die Schwingungsfrequenz der elektromagnetischen Felder an die jeweiligen Anforderungen angepaßt werden können. Zu diesem Zweck ist der aus wenigstens einer Spule zur Erregung des elektromagnetischen Feldes bestehende induktive Verbraucher in Reihe mit einem Meßwiderstand an eine Stromquelle angeschlossen, wobei der durch diese Reihenschaltung fließende Strom mit Hilfe eines in die Versorgungsleitung eingeschalteten Feldeffekttransistors gesteuert wird. Der Feldtransistor wird dabei als in Abhängigkeit von einer Eingangsspannung steuerbarer Widerstand genützt, von dessen Größe der den induktiven Verbraucher durchfließenden Strom abhängt. Zur Ansteuerung des Feldeffekttransistors dient ein Operationsverstärker, der einerseits mit einer Steuersignalspannung und anderseits mit der am Meßwiderstand abfallenden Spannung beaufschlagt wird. Ein Steuersignalgenerator gibt die Vergleichsspannung für den Operationsverstärker vor, dessen die Steuerspannung für den Feldeffekttransistor bildende Ausgangsspannung proportional der Differenz aus der eingangsseitig anliegenden Steuersignalspannung und dem Spannungsabfall am Meßwiderstand ist. Steigt somit die Steuersignalspannung an, so wird aufgrund der zunehmenden eingangsseitigen Spannungsdifferenz des Operationsverstärkers die ausgangsseitige Steuerspannung für den Feldeffekttransistor mit der Wirkung angehoben, daß sich der innere Widerstand des Feldeffekttransistors verringert und der Strom durch den induktiven Verbraucher ansteigt. Dieser höhere Strom bedingt einen steigenden Spannungsabfall am Meßwiderstand, so daß der größere Spannungsabfall am Meßwiderstand die Spannungsdifferenz der eingangsseitig am Operationsverstärker anliegenden Spannungen verringert, bis der Spannungsabfall am Meßwiderstand der Steuersignalspannung entspricht. Mit dem Abfall der Steuersignalspannung ist in analoger Weise eine Stromverringerung verbunden. Die durch den Steuersignalgenerator vorgebbaren Spannungsimpulse bedingen somit entsprechende Stromimpulse, die für die Erregung der elektromagnetischen Wechselfelder gemäß der Steuersignalvorgabe sorgen. Nachteilig bei dieser bekannten Stromversorgung eines induktiven Verbrauchers ist allerdings, daß durch den einen steuerbaren Widerstand bildenden Feldeffekttransistor eine entsprechend hohe Verlustleistung in Kauf genommen werden muß, die als Stromwärme abzuführen ist. Außerdem ist die Strombelastung der Stromquelle vergleichsweise hoch.

Zur Ansteuerung eines Magnetventils mit einer vorgegebenen Taktfrequenz ist es bekannt (DE 35 29 742 A1), die Länge der Stromimpulse durch eine Steuerspannung vorzugeben. Zu diesem Zweck wird ein als Schalter ausgebildeter Leistungstransistor in Reihe einerseits mit einer Parallelschaltung aus dem induktiven Verbraucher und einer Freilaufdiode und anderseits mit einem Meßwiderstand geschaltet, an dem der Spannungsabfall abgegriffen und an einen Komparator angelegt wird, dessen anderer Eingang mit einer konstanten Steuerspannung beaufschlagt wird. Der Leistungstransistor wird über eine bistabile Kippstufe angesteuert, deren Eingänge einerseits an einen Taktgenerator und anderseits an den Komparator angeschlossen sind. Wird über den Taktgenerator die bistabile Kippstufe angestoßen und der Leistungstransistor durchgeschaltet so fließt durch den induktiven Verbraucher Strom, der am Meßwiderstand einen Spannungsabfall bedingt. Übersteigt dieser Spannungsabfall die am Komparator anliegende Steuerspannung, so wird über den Komparator die bistabile Kippschaltung zurückgesetzt und der Leistungstransistor gesperrt. Damit wird zwar eine Regelung erhalten, die den Strom durch den induktiven Verbraucher mit großer Genauigkeit konstant hält, doch kann mit dieser bekannten Schaltung keine Nachbildung einer Steuersignalspannung eines Steuersignalgenerators durch den Verbraucherstrom erreicht werden.

Um ein gutes Ansprechverhalten einer Stromregelung für einen induktiven Verbraucher zu erhalten, ist es schließlich bekannt (JP 07 143 793 A), den durch den induktiven Verbraucher fließenden Strom selbst zu messen und mit einem vorgegebenen Wert zu vergleichen. Übersteigt der Verbraucherstrom den vorgegebenen Grenzwert, so wird einerseits die Stromzufuhr zum induktiven Verbraucher unterbrochen und anderseits ein ohmscher Widerstand in eine Parallelschaltung aus dem induktiven Verbraucher und einer Freilaufdiode geschaltet, um die Zeitkonstante in diesem Kreis herabzusetzen und den induktionsbedingten Strom möglichst rasch zu verringern. Durch eine solche Schaltungsanordnung läßt sich der Verbraucherstrom nicht entsprechend einer vorgegebenen Steuersignalspannung nachbilden. Außerdem ergibt sich ein ungünstiger Wirkungsgrad, weil in dem ohmschen Widerstand die Stromenergie in Wärme umgesetzt wird.

Der Erfindung liegt somit die Aufgabe zugrunde, eine Vorrichtung zur Stromversorgung eines induktiven Verbrauchers, insbesondere eines elektromedizinischen Gerätes zur Erzeugung elektromagnetischer Felder, der eingangs geschilderten Art mit einfachen konstruktiven Mitteln so auszugestalten, daß der Wirkungsgrad erhöht und die Strombelastung der Stromquelle verringert werden kann.

Die Erfindung löst die gestellte Aufgabe dadurch, daß der als Schalter ausgebildete Leistungstransistor über einen Komparator mit Schalthysterese ansteuerbar ist, dessen beiden Eingänge einerseits am Steuersignalgenerator und anderseits am Meßwiderstand anliegen, und daß parallel zur Reihenschaltung aus dem induktiven Verbraucher und dem Meßwiderstand eine Freilaufdiode geschaltet ist.

Da zufolge dieser Maßnahmen der vorzugsweise durch einen Feldeffekttransistor gebildete Leistungstransistor als Schalter dient, dessen Durchgangswiderstand sehr niedrig ist, kann die Verlustleistung im Bereich des Leistungstransistors vorteilhaft klein gehalten werden. Die damit verbundene geringe Wärmeentwicklung macht sonst zur Wärmeabfuhr notwendige konstruktive Maßnahmen überflüssig. Dazu kommt, daß durch die Parallelschaltung der Freilaufdiode mit der Reihenschaltung aus dem induktiven Verbraucher und dem Meßwiderstand ein Stromfluß auch nach dem Sperren des Leistungstransistors zufolge der Selbstinduktion aufrechterhalten wird, so daß sich durch diese Schaltung einerseits eine deutliche Steigerung des Wirkungsgrades und anderseits eine Verringerung der Strombelastung der Stromquelle ergibt. Trotzdem bleibt die vorteilhafte Spannungssteuerung für den Verbraucherstrom gewahrt. Ist die am Komparator anliegende Steuersignalspannung größer als der Spannungsabfall am Meßwiderstand, so wird der durch den Leistungstransistor gebildete Schalter durchgeschaltet, was einen Verbraucherstrom nach sich zieht. Der mit dem Verbraucherstrom verbunden Spannungsabfall am Meßwiderstand bedingt eine Verringerung der Spannungsdifferenz am Eingang des Komparators, der aufgrund seiner Schalthysterese erst kippt, wenn die am Meßwiderstand abgreifbare Spannung die Steuersignalspannung um den durch die Schalthysterese vorgegebenen Schwellwert übersteigt. Da aufgrund der Selbstinduktion des induktiven Verbrauchers der Verbraucherstrom nach dem Durchschalten des Leistungstransistors nur allmählich ansteigt und nach dem Sperren des Leistungstransistors im Schaltkreis über die Freilaufdiode auch nur langsam abfällt, wird der Leistungstransistor nach einem Sperren erst wieder über den Komparator durchgeschaltet, wenn der Spannungsabfall am Meßwiderstand die Steuersignalspannung gegebenenfalls unter Berücksichtigung eines entsprechenden Schwellwertes unterschreitet. Über den Komparator kann demnach der durch den Leistungstransistor gebildete Schalter in vorteilhafter Weise so angesteuert werden, daß der Verlauf des Verbraucherstroms dem der Steuersignalspannung folgt. Es können daher wiederum Stromimpulse entsprechender Form und Größe für die Felderregung im induktiven Verbraucher bereitgestellt werden.

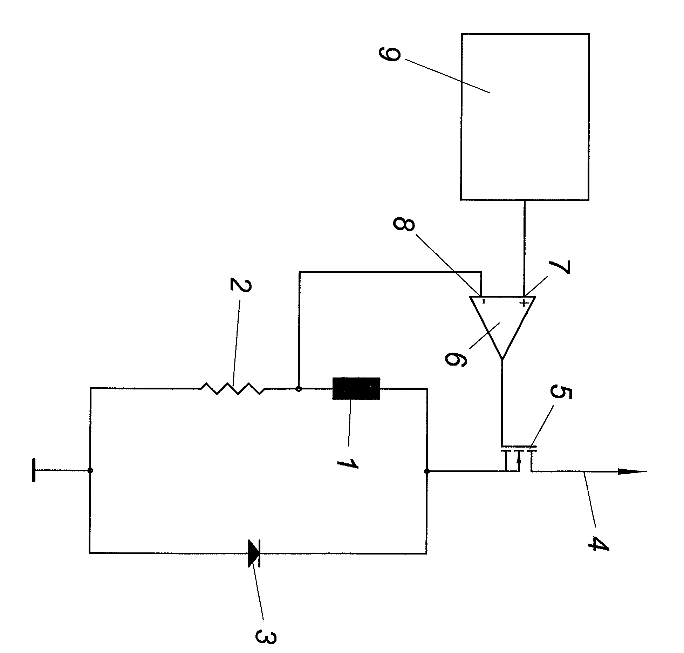

In der Zeichnung ist der Erfindungsgegenstand beispielsweise dargestellt, und zwar wird eine Vorrichtung zur Stromversorgung eines induktiven Verbrauchers in einem schematischen Blockschaltbild gezeigt.

Wie das dargestellte Ausführungsbeispiel erkennen läßt, liegt der induktive Verbraucher 1, beispielsweise die Feldspulen eines elektromedizinischen Gerätes zur Erzeugung elektromagnetischer Wechselfelder, in Reihe mit einem Meßwiderstand 2, wobei diese Reihenschaltung aus induktivem Verbraucher 1 und Meßwiderstand 2 parallel zu einer Freilaufdiode 3 geschaltet ist. Diese Parallelschaltung ist über eine Verbindungsleitung 4 mit einer nicht dargestellten Stromquelle verbunden, die als Netzteil oder als Batterie ausgebildet sein kann. In der Verbindungsleitung 4 ist ein Leistungstransistor 5 vorgesehen, der aus einem als Schalter wirksamen Feldeffekttransistor besteht. Der Steuereingang des Leistungstransistors 5 liegt am Ausgang eines Komparators 6 an, dessen Eingänge 7 und 8 einerseits mit einer Steuersignalspannung eines Steuersignalgenerators 9 und anderseits mit der am Meßwiderstand 2 abgreifbaren Spannung beaufschlagt werden. Da der Komparator 6 eine Schalthysterese aufweist, kippt die Ausgangsspannung erst beim Überschreiten einer entsprechenden Schwellspannung. Dies bedeutet, daß die am Meßwiderstand 2 abfallende Spannung die durch den Steuersignalgeber 9 vorgegebene Vergleichsspannung um einen entsprechenden Schwellwert übersteigen muß, bevor der Komparator 6 kippt und den Leistungstransistor 5 in den jeweils anderen Schaltzustand überführt.

Übersteigt die am Eingang 7 des Komparators 6 anliegende Steuersignalspannung des Steuersignalgenerators 9 die am Meßwiderstand 2 abgegriffene Spannung, mit der der Eingang 8 des Komparators 6 beaufschlagt wird, so wird der Leistungstransistor 5 durchgeschaltet, über den der induktive Verbraucher 1 mit der Stromquelle verbunden wird. Der zu fließen beginnende Verbraucherstrom steigt allerdings aufgrund der Selbstinduktion des induktiven Verbrauchers 1 nur allmählich an. Dies bedeutet, daß sich der Spannungsabfall am Meßwiderstand 2 erst nach und nach vergrößert, was eine allmähliche Vergrößerung der am Meßwiderstand 2 abgegriffenen, am Eingang 8 des Komparators 6 anliegenden Spannung zur Folge hat. Die dadurch bedingte Verringerung der Differenzspannung zwischen den Eingängen 7 und 8 bleibt zunächst ohne Einfluß auf das Schaltverhalten des Komparators 6, der ja erst kippt, wenn die Spannung am Eingang 8 die Spannung am Eingang 7 um den durch die Schalthysterese bedingten Schwellwert übersteigt. Mit dem Kippen des Komparators 6 wird der Leistungstransistor 5 im Sinne eines Sperrens der Verbindungsleitung 4 beaufschlagt und damit der induktive Verbraucher 1 von der Stromquelle getrennt. Nun kommt die Freilaufdiode 3 zum Tragen, die die Reihenschaltung aus induktivem Verbraucher 1 und Meßwiderstand 2 kurzschließt und einen durch die Selbstinduktion bedingten Stromfluß durch den Verbraucher 1 ermöglicht. Dieser abnehmende Verbraucherstrom bringt eine abnehmende Spannung am Eingang 8 des Komparators 6 mit sich, der den Leistungstransistor 5 wieder durchschaltet, sobald die Spannung am Eingang 8 des Komparators 6 entsprechend dem Schwellwert gegenüber der Steuersignalspannung am Eingang 7 abgesunken ist. Mit dem Durchschalten des Leistungstransistors 5 steigt der Verbraucherstrom wieder an, wobei die Freilaufdiode 3 einen Stromfluß durch den die Diode 3 aufnehmenden Leitungsast sperrt. Die am Komparator 6 anliegende Steuersignalspannung des Steuersignalgenerators 9 wird daher in ihrem Verlauf durch den Verbraucherstrom nachgebildet, wegen der Selbstinduktion des induktiven Verbrauchers 1 allerdings nur angenähert, was jedoch im Hinblick auf eine Felderregung keine praktische Bedeutung hat.

Durch den in der beschriebenen Weise eingesetzten Leistungstransistor kann jedoch unter der Voraussetzung, daß zur Reihenschaltung des induktiven Verbrauchers 1 und des Meßwiderstandes 2 eine Freilaufdiode 3 parallelgeschaltet wird, ein hoher Wirkungsgrad erreichen, wobei die Wärmeentwicklung kleingehalten werden kann. Wegen der sonst durch die Wärmebelastung bedingten Leistungsbegrenzung kann im Bedarfsfall auch die Amplitude des Verbraucherstroms entsprechend vergrößert werden.

## Patentansprüche

1. Vorrichtung zur Stromversorgung eines induktiven Verbrauchers, insbesondere eines elektromedizinischen Gerätes zur Erzeugung elektromagnetischer Felder, mit einer an eine Stromquelle angeschlossenen Reihenschaltung aus dem induktiven Verbraucher, einem Meßwiderstand und einem Leistungstransistor, der über einen Steuersignalgenerator in Abhängigkeit vom Spannungsabfall am Meßwiderstand ansteuerbar ist, **dadurch gekennzeichnet, daß** der als Schalter ausgebildete Leistungstransistor (5) über einen Komparator (6) mit Schalthysterese ansteuerbar ist, dessen beiden Eingänge (7, 8) einerseits am Steuersignalgenerator (9) und anderseits am Meßwiderstand (2) anliegen, und daß parallel zur Reihenschaltung aus dem induktiven Verbraucher (1) und dem Meßwiderstand (2) eine Freilaufdiode (3) geschaltet ist.
